# EUROPEAN PATENT SPECIFICATION

(11) **EP 2 562 479 B1**
(45) Date of publication and mention of the grant of the patent: **16.03.2016**
(21) Application number: 12180538.6
(22) Date of filing: 15.08.2012
(51) Int. Cl.: F23R 3/00

(54) **Wall elements for gas turbine engines**
Wandelemente für Gasturbinenmotoren
Éléments muraux pour moteurs à turbine à gaz

(30) Priority: 26.08.2011 GB 201114745
(43) Date of publication of application: 27.02.2013
(73) Proprietor: Rolls-Royce plc, London SW1E 6AT (GB)
(72) Inventor: Gregory, Jonathan, Cheltenham, Gloucestershire GL53 9DT (GB)
(74) Representative: Rolls-Royce plc

(56) References cited:
- GB-A- 2 356 042
- US-A- 5 353 865
- US-A1- 2005 262 844
- US-A1- 2008 145 211

## Description

This invention relates to cooling in gas turbine engines, and in particular to cooling wall elements for use in wall structures of components, such as combustors and turbines, of gas turbine engines.

Combustors of gas turbine engines can be constructed with a double-wall (also known as a double-skin) structure. Typically, an annular combustor may have radially inner and outer walls, each having a double-wall structure. Other elements of a gas turbine engine that are exposed to high temperature can be similarly constructed with a double-wall structure. Such a double-wall structure has an external wall and an internal wall. In the case of a combustor, the internal wall is usually formed of a plurality of tiles or other similar wall elements. The internal wall has a surface that faces the hot fluid, for example the combustion fluids inside the combustion chamber.

Conventional cooling methods involve passing cooling air through holes in the external wall such that it directly impinges on the internal wall. This may be referred to as impingement cooling. Further cooling may be provided through convection by passing the cooling air between the internal and external walls. Still further cooling may be provided by passing the cooling air out through holes in the internal wall to provide a cooling film on the surface of the internal wall that faces the hot fluid.

GB 2356042 discloses a wall element of a combustor in a gas turbine engine comprising a base portion and a barrier member extending at least part way across the base portion, the barrier member serving to control the flow of a cooling fluid across the base portion. In GB 2356042, the base portion may be provided with a plurality of heat removal members which may comprise heat removal pedestals.

US 2005/0262844 discloses a gas turbine combustion liner having an interface region between it and a transition duct. The region of the combustion liner proximate its second end comprises a plurality of first feed holes that pass a cooling fluid into an annulus formed between a cooling ring and the combustion liner. The cooling fluid passes over a plurality of raised ridges that increase the surface area of the outer liner wall to turbulate the cooling fluid and maximize the cooling effectiveness.

US 2008/0145211 discloses a wall structure for an annular gas turbine engine combustor including an outer wall having a radial step and an inner wall overlapping the radial step, the inner wall having a local thickening opposing the radial step.

US 5353865 describes an improved heat transfer assembly including a textured impingement surface and means for impinging cooling air directly upon the textured surface. A component includes a surface textured to increase convective heat transfer with minimal increase in resistance to conductive heat transfer through the component. The textured surface can comprise an array of closely spaced hemispherically shaped protuberances. US 5353865 also describes a method for texturing a surface with discrete laser welds.

A significant amount of cooling airflow is used to cool such a double-wall structure using current methods. The airflow that is used for cooling could otherwise be used to provide thrust and thus to improve propulsive efficiency of the engine.

An object of the present invention is therefore to provide an improved cooling arrangement to reduce the amount of cooling airflow required for a given level of cooling.

According to an aspect of the invention, there is provided a gas turbine engine component comprising a double-wall structure. The double-wall structure comprises: a first wall having a first surface and a second surface; and a second wall spaced apart from the first wall such that the second surface of the first wall faces the second wall, the second wall comprising at least one cooling fluid orifice configured to direct cooling fluid in the direction of the first wall. The double wall structure also comprises a protrusion extending from a base on the second surface of the first wall to a tip. The or each protrusion corresponds to a respective cooling fluid orifice and is located such that a line that passes through the tip of a given protrusion and which is normal to the second surface passes through the respective cooling fluid orifice such that, in use, cooling fluid from a respective cooling fluid orifice is directed towards its tip, with substantially all cooling fluid that is directed towards the tip of any given protrusion being from its corresponding respective cooling fluid orifice such that the cooling fluid follows the external shape of the protrusion as it moves from the tip to the base. The height of the protrusion above the second surface may be at least 25% of the distance between the first wall and the second wall.

In such an arrangement, the first surface (which may be referred to as the outer surface) of the first wall (which may be referred to as the internal wall) may, in use, be exposed to high temperatures, for example the inside of a combustor. Providing a protrusion on the second surface (which may be referred to as the inner surface) of the first wall and directing cooling fluid towards and over it may increase the heat transfer away from the first wall. This may increase the efficiency of the cooling flow, and thus decrease the amount of cooling fluid required to obtain a desired amount of cooling.

The protrusion may have a generally tapered shape from the base to the tip. In use, the cooling fluid may be caused to diverge over the protrusion as it passes from the tip to the base. In this way, heat is transferred from the protrusion to the cooling fluid as it passes over the protrusion, and the direction of the cooling fluid can be changed in a controlled manner, for example so as to become more aligned with the surface from which the protrusion extends.

In use, substantially all cooling fluid that is directed towards the tip of any given protrusion may be from its corresponding respective cooling fluid orifice. This means that substantially all of the cooling fluid supplied to any given protrusion is from a single cooling fluid orifice. According to this aspect, though, each orifice may supply cooling fluid to more than one protrusion, such that the number of protrusions may be greater than the number of cooling fluid orifices.

The double-wall structure may comprise a plurality of cooling fluid orifices, each cooling fluid orifice corresponding to a single respective protrusion. According to an aspect, substantially all cooling fluid from any given cooling fluid orifice may be directed towards its corresponding single respective protrusion. This means that substantially all of the cooling fluid supplied by any given cooling fluid orifice is supplied to a single protrusion. According to this aspect, each orifice may only supply cooling fluid to one protrusion, although each protrusion may be supplied with cooling fluid by more than one orifice, such that the number of protrusions may be less than the number of cooling fluid orifices.

The double-wall structure may comprise a trough. The trough may extend around at least a part of the perimeter of the base of each protrusion. The trough may be formed in the second surface of the first wall. Such a trough may help to further enhance heat transfer from the first wall to the cooling fluid, for example by causing a "scrubbing" vortex to be formed therein.

Each protrusion may have a major axis that is aligned with a major axis of a corresponding cooling fluid orifice. This can help to ensure that the cooling fluid is delivered from the cooling fluid orifice to the protrusion in the desired way.

Each protrusion may have a major axis that is parallel to and offset from a major axis of a corresponding cooling fluid orifice.

The or each protrusion may be axisymmetric about a major axis that is substantially normal to the second surface of the first wall, from which the protrusion extends.

Cross sections taken through the or each protrusion in any plane perpendicular to the major axis may be circular.

Each protrusion may skewed from base to tip in a direction that is parallel to the principal rotational axis of the gas turbine engine when assembled. The direction in which the protrusion is skewed may be the upstream direction of the fluid flow through the gas turbine engine when in use

In some embodiments, each protrusion may have a major axis that is parallel to the second surface of the first wall. In such embodiments, it may be particularly advantageous to have more than one cooling fluid orifice arranged to supply cooling fluid to a single protrusion, so as to ensure appropriate cooling fluid (in terms of, for example, flow rate and distribution) is directed to each protrusion.

The or each cooling fluid orifice may be a feed hole in the second wall. The cooling fluid may be cooling air, for example taken from a compressor, such as the high pressure compressor, or from a bypass flow or secondary flow. The cooling air may, in operation, flow along or around the surface of the second wall (which may be referred to as the external wall) that faces away from the first wall before passing through the feed hole.

The tip of the or each protrusion may extend at least partially into a respective feed hole in the second wall. This arrangement may help to provide the desired flow pattern over the protrusion(s).

Each protrusion may have a major longitudinal axis, and the spacing between neighbouring longitudinal axes may be at least 50% of the spacing between the first wall and the second wall. This feature may help to ensure that the protrusions are spaced to provide optimum heat transfer away from the first wall, for example as the cooling fluid flows along the surfaces of the protrusions. For example, it may reduce any impact of thermal boundary layers of neighbouring protrusions interacting with each other.

According to an aspect, there is provided a combustor comprising a gas turbine engine component comprising a double-wall structure as described herein. The first surface of the first wall may face the inside of the combustor. The double-wall structure may thus substantially reduce and/or minimize the amount of cooling air required to cool the combustor walls.

According to an aspect, there is provided an aerofoil comprising a gas turbine engine component comprising a double-wall structure according as described herein. In use, the first surface of the first wall may face a working fluid. This may substantially reduce and/or minimize the amount of cooling air required to cool such a component.

According to an aspect, there is provided a nozzle comprising a gas turbine engine component comprising a double-wall structure according as described herein.

According to an aspect, there is provided a method of cooling a double-wall structure, the double-wall structure having a first wall and a second wall, the second wall being spaced apart from the first wall. The method comprises supplying a cooling fluid flow to a protrusion from a respective cooling fluid orifice. The protrusion is provided on a second surface of the first wall. The protrusion extends from a base in the direction of the second wall to a tip, the cooling fluid flow being directed towards the tip of the protrusion. The or each protrusion is located such that a line that passes through the tip of a protrusion and which is normal to the second surface passes through the respective cooling fluid orifice. In use, cooling fluid from its respective cooling fluid orifice is directed towards the tip of the protrusion, with substantially all cooling fluid that is directed towards the tip of any given protrusion being from its corresponding respective cooling fluid orifice. The height of the protrusion above the second surface is at least 25% of the distance between the first wall and the second wall. The cooling fluid follows the external shape of the protrusion as it moves from the tip to the base, thereby removing heat from the protrusion.

In an embodiment, the cooling fluid orifice is a hole in the second wall, and the method comprises supplying cooling fluid flow through the hole.

Embodiments of the invention will now be described by way of example only, with reference to the accompanying diagrammatic drawings, in which:
Figure 1 is a sectional side view of a gas turbine engine according to an embodiment;
Figure 2 is a sectional side view of part of a combustor of the engine shown in Fig. 1;
Figure 3 is a diagrammatic sectional side view of part of a double-wall structure of a combustor;
Figure 4 is a diagrammatic sectional side view of part of a double-wall structure showing a protrusion according to an embodiment;
Figure 5 is a diagrammatic sectional isometric view of part of a double-wall structure including protrusions according to an embodiment;
Figure 6 is a diagrammatic sectional side view of part of a double-wall structure showing a protrusion according to another embodiment;
Figure 7 is a diagrammatic sectional side view of the part of the double-wall structure shown in Figure 4, with various dimensions labeled;
Figure 8 is a diagrammatic sectional side view of part of a double-wall structure showing a protrusion according to another embodiment;
Figure 9 is a diagrammatic sectional side view of part of a double-wall structure showing a protrusion according to another embodiment; and
Figure 10 is a diagrammatic sectional isometric view of a double-wall structure according to an embodiment having projections and effusion cooling holes.

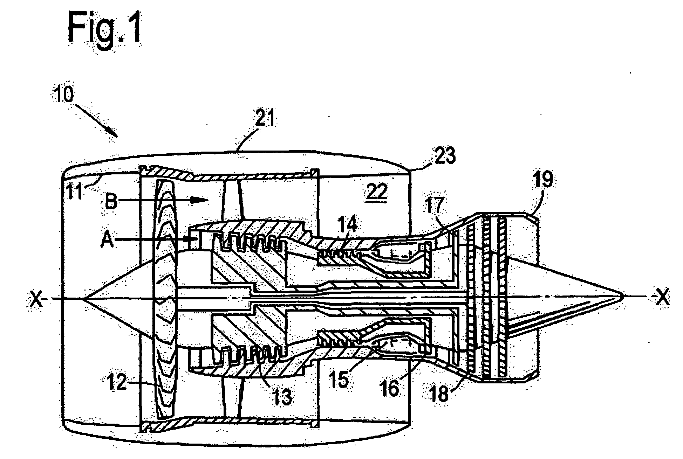

With reference to Figure 1, a ducted fan gas turbine engine generally indicated at 10 has a principal and rotational axis X-X. The engine 10 comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine 10 and defines the intake 12, a bypass duct 22 and a bypass exhaust nozzle 23.

The gas turbine engine 10 works in a conventional manner so that air entering the intake 11 is accelerated by the fan 12 to produce two air flows: a first air flow A into the intermediate pressure compressor 14 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive, the high, intermediate and low-pressure turbines 16, 17, 18 before being exhausted through the nozzle 19 to provide additional propulsive thrust. The high, intermediate and low-pressure turbines 16, 17, 18 respectively drive the high and intermediate pressure compressors 14, 13 and the fan 12 by suitable interconnecting shafts.

This ducted gas turbine engine is one of many engines that the double-wall structure can be applied to and is not intended to be limiting. Purely by way of further example, other engines that the double-wall structure could be applied to include turbofan, turbojet, turboshaft, ramjet (and variants thereof) and nozzles thereof.

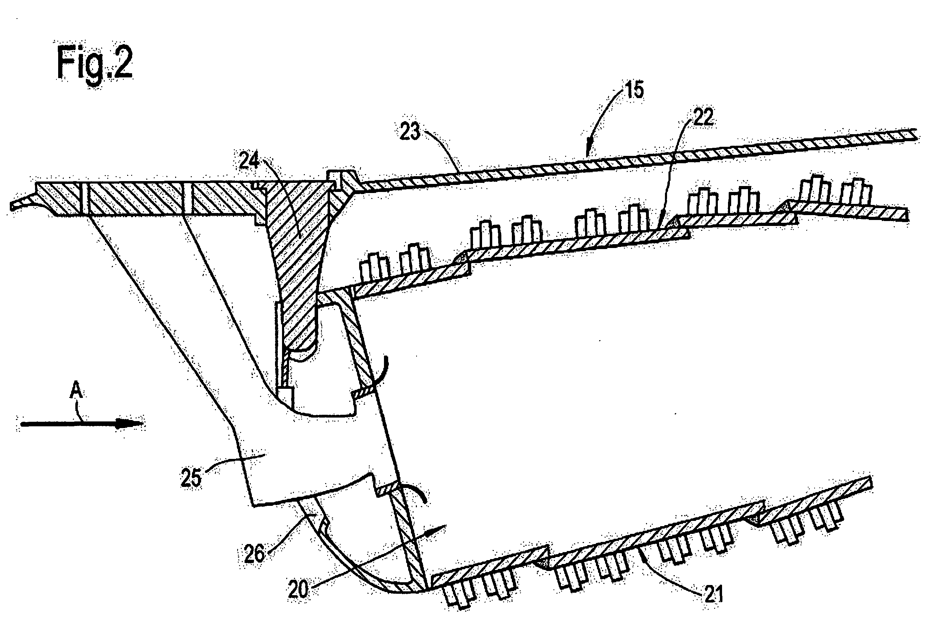

Referring to Fig. 2, the combustor 15 comprises an annular combustion chamber 20 having radially inner and outer double-wall structures 21 and 22 respectively. The combustor 15 is secured to a wall 23 by a plurality of pins 24 (only one of which is shown). Fuel is directed into the chamber 20 through a number of fuel nozzles 25 located at the upstream end 26 of the chamber 20. The fuel nozzles are circumferentially spaced around the engine 10 and serve to spray fuel into air (flow A) derived from the high-pressure compressor 14. The resultant fuel/air mixture is then combusted within the chamber 20.

The combustion process, which takes place within the chamber 20, naturally generates a large amount of heat. It is necessary therefore to arrange the inner and outer wall structures 21 and 22 such that they are capable of withstanding the heat.

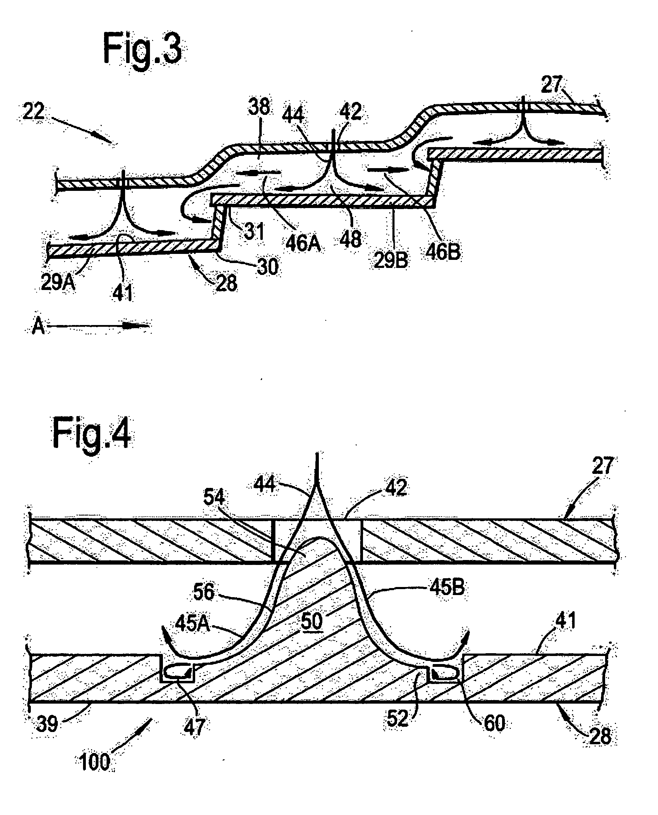

Referring now to Figure 3, conventional radially inner and outer double-wall structures 21 and 22 each comprise an external wall in the form of a liner 27 and an internal wall 28. Figure 3 shows an outer double-wall structure 22. The terms 'internal' and 'external' are with respect to the combustion chamber 20. The internal wall 28 is made up of a plurality of discrete wall elements in the form of tiles 29A and 29B. Each of the tiles 29A, 29B has circumferentially extending edges 30 and 31, and the tiles are positioned adjacent each other, such that the edges 30 and 31 of adjacent tiles 29A, 29B overlap each other. Alternatively, the edges 30, 31 of adjacent tiles can abut each other.

The circumferentially extending edges 30 and 31 are spaced from the liner 27 to define therebetween a space 38 for the flow of cooling fluid in the form of cooling air. Conventional securing means (not shown) in the form of a plurality of threaded plugs extend from the base portions of the tiles 29A, 29B through apertures in the outer wall 27. Nuts are screwed onto the plugs to secure the tiles 29A, 29B to the external wall 27.

Feed holes 42 are provided in the liner 27 to permit air from the high pressure compressor 14 to pass into the space 38 as illustrated by the arrows 44. Air entering the space will pass forwards and backwards (with respect to the main airflow A through the engine) as illustrated by the arrows 46A and 46B. At the edges 30, 31 of the tiles 29A, 29B the air will pass over the inner surface 41 of an adjacent tile 29B. For forward flowing air 46B, the path is simply over the inner hot surface 41 of an adjacent downstream tile 29B which will be offset outwardly as illustrated in the figure. For backwards flowing cooling air 46B, the air will turn 180º to pass in a downstream direction with the air from the adjacent upstream tile 29A, 29B.

This conventional configuration uses a significant amount of cooling airflow that could otherwise be used to improve propulsive efficiency of the engine. The point 48 at which the cooling air 44 entering through the feed holes 42 impinges on the inner surface 41 of the internal wall 28 may be a particular source of loss in the conventional configuration. For example turning the cooling flow through approximately 90 degrees at the point of impingement is relatively uncontrolled in the conventional configuration. This may lead to flow turbulence and/or loss in available cooling potential of the flow at the impingement point 48.

An object of the present invention is therefore to provide more efficient cooling of the internal wall 28. In particular, it is an object of the invention to better utilize the cooling air 44 entering through the feed holes 42.

Referring now to Figure 4, a double-wall structure 100 according to an embodiment is shown in cross section. Some of the features of the double-wall structure 100 of Figure 4 are common to the conventional double-wall structure 22 described above in relation to Figure 3, and so the same reference numerals are used where appropriate.

The external wall 27 and feed hole 42 shown in Figure 4 are substantially the same as those shown in Figure 3. A part of the internal wall 28 is also shown in Figure 4, and this is at least in part different to that of Figure 3, as described below. In the present invention, the internal wall 28 may comprise distinct tiles in a similar general arrangement to the tiles 29A, 29B described in relation to Figure 4. However, other arrangements of internal wall 28 may also be in accordance with the invention, for example an arrangement in which the internal wall is continuous in the axial direction.

As shown in Figure 4, the internal wall 28 of the double-wall structure 100 has a protrusion 50 extending therefrom. The protrusion 50 extends towards the external wall 27. In the embodiment shown in Figure 4, the protrusion 50 extends towards the feed hole (or cooling fluid orifice) 42 in the external wall 27. The protrusion 50 has a base 52 that is located on the internal wall 28. The protrusion 50 extends from the base (or base portion) 52 to a tip (or tip portion) 54.

In operation, cooling air 44 exits the feed hole 42 towards the tip 54 of the protrusion 50. The cooling air 44 may be bled from the HP compressor, for example from the exit of the compressor. Alternatively, the cooling air 44 may be provided by any other suitable source, such as a dedicated cooling feed. The cooling air 44 may be said to impinge on the tip 54 of the protrusion 50.

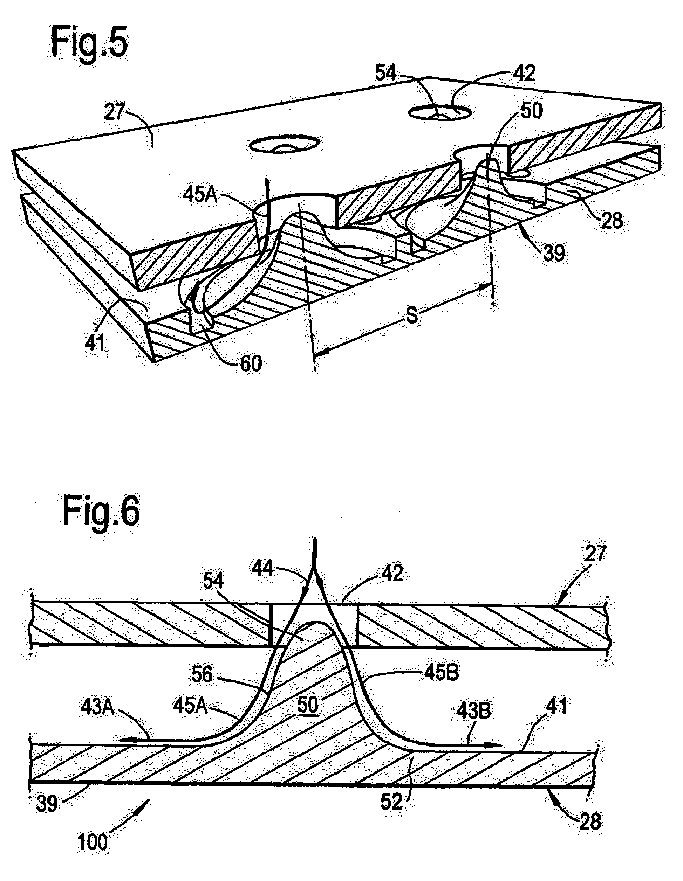

The protrusion 50 of the embodiment shown in Figure 4 has a generally tapered shape from base 52 to tip 54. The protrusion 50 may be said to have a generally divergent shape from tip 54 to base 52. The cooling air follows the external shape of the protrusion 50 as it moves from the tip 54 to the base 52. This helps to improve heat transfer from the internal wall 28. Without being bound by any particular theory, the improved heat transfer may result from one or more than one effect, as described below with particular reference to Figures 4 and 5.

Figure 5 shows a cross section through an isometric view of the double-wall structure 100 shown in Figure 4. As shown by the arrows 45A and 45B in Figures 4 and 5, the cooling air directed towards the tip 54 of the protrusion 50 follows the divergent shape of the sidewalls 56 along flow path 45A and 45B. This means that heat is transferred away from the protrusion 50, and thus away from the internal wall 28, along the length of the sidewall(s) 56 by the cooling air 45A and 45B. It will be appreciated that the arrows 45A and 45B in Figures 4 and 5 represent a continuous surface of cooling air flowing over the protrusion 50. The protrusion 50 therefore may be seen as increasing the surface area of the internal wall 28 that the cooling air flows over (or "scrubs"). This in itself may improve the efficiency of the heat transfer compared with the conventional impingement arrangement shown in Figure 3, in which the cooling flow impinges directly on the inner surface 41 of the internal wall 28, by providing a greater surface area for cooling.

An additional or alternative improvement in cooling may result from the protrusion 50 acting to redirect the cooling flow 44 in a controlled manner. For example, the protrusion 50 may redirect the flow from a direction 44 that is substantially perpendicular to the internal wall 28 to a direction that is substantially parallel to the internal wall 28 (which may be referred to as a lateral direction) in a controlled (and thus more efficient) manner. This may be a feature of all embodiments, but may be particularly advantageous with regard to the embodiment shown in Figure 6.

The Figure 6 embodiment is substantially the same as the Figure 4 embodiment, other than in that it does not have the trough 60 (described in greater detail below) at the base of the protrusion 50. This means that the flow is redirected smoothly by the protrusion 50 to take a substantially lateral path 43A/43B at its base 52 (i.e. substantially parallel to the internal wall 28). The flow may thus become more aligned with the inner surface 41 as it passes over (and is redirected by) the protrusion 50. The redirected flow 43A/43B can then remove heat efficiently via convection from the inner surface 41 of the internal wall 28.

Returning to the embodiment shown in Figures 4 and 5, the protrusion 50 has a trough (which may be referred to as a recess or channel) 60 formed at its base 52. The trough 60 may be formed around all of the base 52 (so as to form a closed loop around the protrusion 50), or around a part of the base 52. Such a trough 60 may be formed around at least a part of the base 52 of the protrusion 50 regardless of the shape of the protrusion 50.

The trough 60 may act to further improve heat transfer from the internal wall 28 to the cooling air. As shown in Figure 4, the trough 60 may generate a vortex (or recirculation) 47 therein. This vortex 47 removes heat from the internal wall 28 by generating high velocity cooling air flow on the surfaces of the trough 60. This high velocity cooling air flow may be said to "scrub" the surfaces of the trough 60, and as such the vortex 47 may be referred to as a "scrubbing vortex".

The cross section of the trough 60 is shown in the embodiment of Figures 4 and 5 as having perpendicular corners. The base 52 of this embodiment is also shown to be lower (i.e. closer to the outer surface 39) than the inner surface 41. This may help to generate and/or strengthen the scrubbing vortex 47. However, any other suitable shape could be used for the trough 60. Similarly, the base 52 of the protrusion 50 could be the same height above the outer surface 39 as the rest of the inner surface 41. The depth of the base 62 of the trough 60 below the inner surface 41 of the internal wall 28, and the width of the trough 60, may be chosen to maximize that heat transfer to the scrubbing vortex 47. Additionally or alternatively, the depth and width of the trough 60 may be chosen to avoid the vortex (or vortices) 47 breaking up and losing energy through turbulent dissipation. Purely by way of example only, the depth of the base 62 of the trough 60 below the inner surface 41 of the internal wall 28 may be in the range of from 5% to 50%, for example 10% to 40%, for example 15%to 25% of the distance w between the internal wall 28 and the external wall 27. However, the depth of the trough 60 may be outside these ranges in some arrangements.

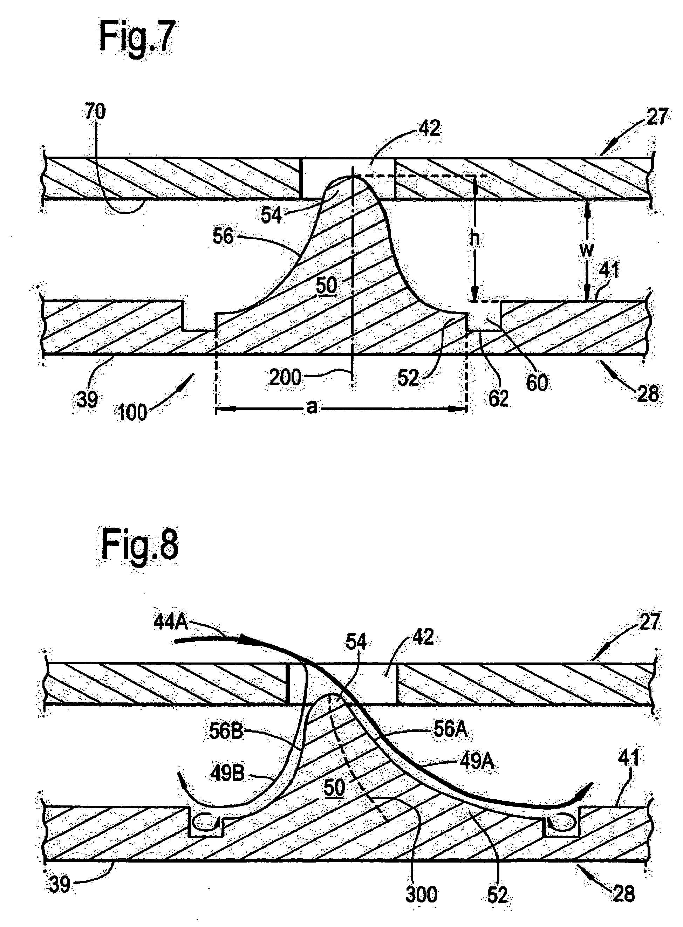

To aid the description, the embodiment shown in Figure 4 is duplicated in Figure 7, but with some of the reference numerals and flow paths removed and with dimensional labels added. As shown in Figure 7, the protrusion 50 shown in the embodiment of Figures 4 and 5 is axisymmetric about an axis 200. The protrusion 50 of this embodiment is circular in cross sections taken perpendicular to the axis 200 along the length of the axis. The diameters of the circular cross sections increase from the tip 54 to the base 52. Furthermore, the rate at which the diameters increase along the length of the axis 200 increases towards the base 52 of the protrusion shown in Figures 4 and 5.

Other shapes of protrusion are also in accordance with embodiments. For example other axisymmetric shapes may be used for the protrusion 50. Alternatively, shapes with 2, 3, 4, 5 or more than 5 axes of symmetry may be used. Alternatively still, elongate shapes which have a major axis aligned with the inner surface 41 of the internal wall 28 may be used. Such an elongate shape may have a cross-section in the plane of that of Figures 4 and 5 that is substantially the same as that shown in Figures 4 or 5, but with a longitudinal axis stretching into the plane of the paper in the view shown in Figure 4, rather than being axisymmetric.

Other cross-sectional shapes (in the plane shown in Figures 4 and 5) could also be used, either for axisymmetric or elongate protrusions, including triangles, wedges, and different "bell" shapes. Any feature described herein in relation to the embodiment of Figures 4 and 5 may also apply to other shapes of protrusion. Such features include, but are not limited to, the relative and/or absolute height of the protrusions, the spacing between the protrusions, the relationship between the feed holes 42 and the protrusions 50 (for example the relative number of feed holes 42 and protrusions 50 and the gap between them), and the details of the trench 60 (or the lack of a trench 60).

An example of an alternative shape of protrusion 50 is shown in Figure 8. The protrusion 50 in Figure 8 is shaped to make effective use of cooling air 44A that flows (or has a flow component, for example a substantial flow component) parallel to the external wall 27 before flowing through the feed hole 42. The cooling air 44A may be said to have a component in the axial direction (or the downstream direction) of the engine as it approaches the feed hole 42. This means that the flow passing through the feed hole 42 may also have an axial component, i.e. it may not flow parallel to the feed hole axis.

In this case, the protrusion 50 may be shaped such that, in cross section in a plane perpendicular to the internal wall 28 and parallel to the axial direction (i.e. in the cross section shown in Figure 8), the wall length from the tip 54 to the base 52 is greater in the downstream flow direction (i.e. wall length 56A) than in the upstream flow direction (i.e. wall length 56B). This means that the tip of the protrusion 50 may be skewed towards the upstream direction relative to the cooling flow 44A before the cooling flow 44A passes through the feed hole 42 (or relative to the main flow through the engine 10). Thus, the centroid of cross sections taken perpendicular to the (local) surface normal of the inner surface 41 may prescribe a path that has a component in the upstream (axial) direction as it moves from the base 52 to the tip 54 of the protrusion 50. The centroid path 300 (illustrated in Figure 8) may have a decreasing upstream (axial) component as it moves from the base 52 to the tip 54. The centroid path 300 may have an increasing radial component as it moves from the base 52 to the tip 54. Where reference is made herein to the distance between protrusions (or the distance between longitudinal axes of protrusions), this may mean the distance between equivalent points (in terms of the distance above the inner surface 41) on the centroid path 300 of neighbouring skewed protrusions.

Any suitable shape could be used for the cross sections taken perpendicular to the (local) surface normal of the inner surface 41 for the skewed protrusion 50 shown in Figure 8. By way of non-limitative example, these cross sectional shapes could be circular, ovoid, or any other shape described herein in relation to other embodiments.

Skewing the protrusion 50, for example in the manner illustrated in Figure 8, may help to further improve cooling. For example, the convection from the downstream side 56A of the protrusion may be improved due to the shape being more sympathetic (or aligned) with the oncoming flow 44A, which may have an axial component. This may mean that the flow 49A removes heat more effectively in this region.

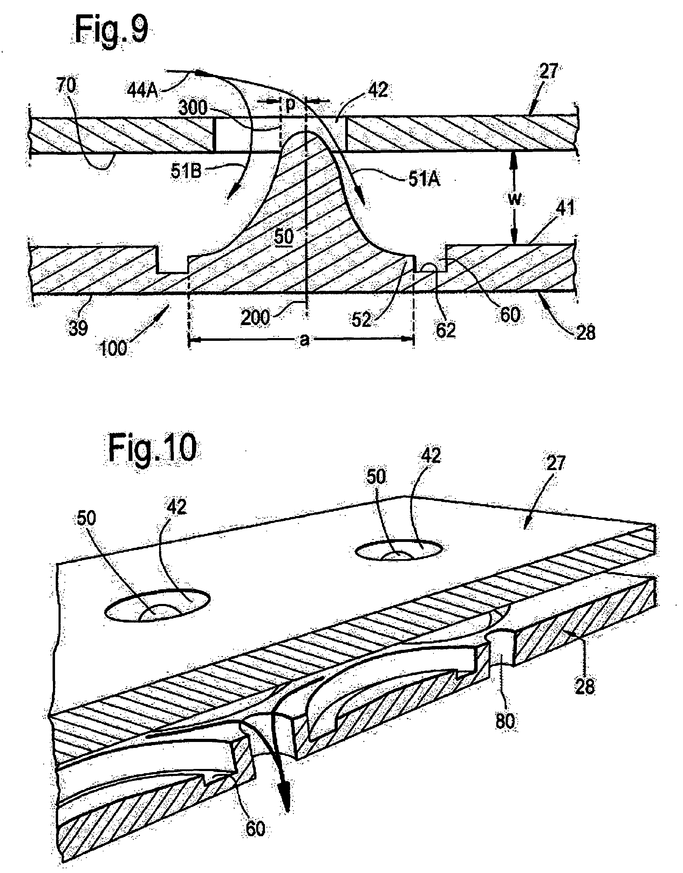

In an embodiment the protrusion 50 may be offset from the feed hole 42. In the Figure 9 example, the major axis 200 of the protrusion 50 is offset by a distance p from the major axis 300 of the feed hole 42. The protrusion 50 may be offset in an axial direction. The protrusion 50 may be offset in a downstream (relative to the flow of air through the engine 10 and/or relative to the oncoming cooling air flow 44A before it passes through the feed hole 42) axial direction.

The protrusion 50 is shown in Figure 9 as having the same shape as the protrusion in Figure 4. It will be appreciated that any suitable shape of protrusion, such as those described herein in relation to other embodiments, could be offset from the feed hole 42.

Offsetting the protrusion 50 from the feed hole 42 may help to further improve cooling of the internal wall 28. For example, it may help to encourage uniform flow rates around the surface of the protrusion 50, as shown by the arrows 51 A, 51 B in Figure 9. Additionally or alternatively, offsetting the protrusion 50 may help to encourage a higher overall flow rate through a given size of feed hole 42, for example by encouraging more flow in the axially upstream direction.

Returning to the embodiment of Figure 4, the protrusion 50 extends into the feed hole 42. As such the tip 54 of the protrusion 50 lies inside the feed hole 42. This means that the distance h of the tip 54 of the protrusion 50 from an extension of the inner surface 41 of the internal wall 28 (that is, the height h of the tip 54 above the inner surface 41 of the internal wall 28) is greater than the local distance w between the internal wall 28 and the external wall 27 (that is, the distance w between the inner surface 41 of the internal wall 28 and the facing surface 70 of the external wall 27).

In some embodiments, the tip 54 of the protrusion 50 may lie below the internal wall 27, such that the distance h is less than the distance w. In other embodiments, the tip 54 of the protrusion 50 may lie above the internal wall 27. According to the invention, the distance h is at least 25% of the distance w. In an embodiment, the distance h is in the range of from 25% to 200% of the distance w. In an embodiment, the distance h is in the range of from 50% to 150% of the distance w. In an embodiment, the distance h is in the range of from 75% to 125% of the distance w. In an embodiment, the distance h is in the range of from 85% to 115% of the distance w. In an embodiment, the distance h is in the range of from 95% to 105% of the distance w, for example around 100%. In an embodiment, the ratio of the distance h to the distance w is chosen to be any value that ensures that the tip 54 lies within the hole 42.

The width a of the base 52 of the protrusion shown in Figure 7 may be of the same order of magnitude as the distance h and distance w defined above. For example, the width a may be in the range of from 50% to 500% of the distance w between the internal wall 27 and the external wall 28. Typically, the width a is in the range of from 75% to 250% of the distance w between the internal wall 27 and the external wall 28, preferably in the range of from 100% to 200%, for example on the order of 150%. However, in some embodiments, the relationship between the width a and the distance w may be outside these ranges. In the example shown in Figure 7, the width a of the base 52 is the same as the diameter a of the base 52, because the protrusion 50 is of circular cross section along its longitudinal axis. In embodiments which have elongated protrusions 50, with a major (longitudinal) axis parallel to the internal wall 28, the width a of the base 52 may be the width in the plane that is perpendicular to the major axis of the elongate shape.

As can be seen from Figure 5, the separation s between the major axis 200 of the protrusions 50 in this embodiment may be greater than the distance h and/or than the distance w. In other embodiments, this may not be the case. Any suitable spacing between the protrusions may be used according to the flow regime and/or the cooling requirements. In an embodiment, the separation s between the protrusions may be in the range of from 50% and 500% of the distance w between the internal wall 28 and the internal wall 27, preferably in the range of from 75% to 250%, preferably in the range of from 100% to 200%, for example on the order of 150%. However, in some embodiments, the relationship between the width s and the distance w may be outside these ranges.

The feed holes 42 (which may also be referred to as cooling fluid orifices 42) in the described embodiment are circular. The axis of each of the feed holes 42 is aligned with the axis 200 of the protrusion 50. In other embodiments, the feed holes 42 may not be circular. For example, the feed hole 42 may be elongate (for example rectangular or oval), or square. The shape of the feed holes 42 may correspond to the shape of the protrusions 50 towards the tip 54. Thus, for example, in an embodiment with elongate protrusions 50 that have a major (longitudinal) axis extending parallel to the internal wall 28, the feed holes may have a rectangular or oval shape.

In the embodiments shown in Figures 4 to 7, each protrusion 50 is fed with cooling air from a single corresponding feed hole 42. Thus there is a one-to-one relationship between the feed holes 42 and the protrusions 50. The number of feed holes 42 may thus be equal to the number of protrusions 50.

In alternative embodiments, the number of feed holes 42 may not be equal to the number of protrusions 50. For example, each feed hole 42 may provide cooling air to more than one protrusion 50. In this case, the number of protrusions 50 may be greater than the number of feed holes 42. In other embodiments, each protrusion 50 may receive cooling air from more than one feed hole 42. In this case, the number of protrusions 50 may be less than the number of feed holes 42. By way of non-limitative example, the ratio of the number of feed holes 42 to the number of protrusions 50 may be greater than 10:1, 10:1, 9:1, 8:1, 7:1, 6:1, 5:1, 4:1, 3:1, 2:1, 1:1, 1:2, 1:3, 1:4, 1:5, 1:6, 1:7, 1:8, 1:9, 1:10, or less than 1:10.

In aspects other than those in relation to the protrusion(s) 50 and feed hole(s) 42, the double-wall structure of the present invention may be similar to conventional arrangements, such as that shown in Figure 3. For example, the internal wall 28 may also comprise one or more holes extending therethrough. These holes may be referred to as effusion cooling holes. Such effusion cooling holes 80 are shown in Figure 8.

In operation, these holes 80 enable cooling air to pass from the inner surface 41 of the internal wall 28 to the outer surface 39 that faces the hot gases. The effusion cooling holes may thus operate in a conventional manner, i.e. to create a film of relatively cool air on the outer surface 39 of the internal wall 28. In an embodiment of the present invention, the cooling air that passes through the effusion cooling holes 80 may have passed through the feed hole(s) 42 and over the protrusion(s) 50 before passing through the effusion cooling holes 80.

In embodiments including effusion cooling holes 80, the axis of the effusion cooling holes 80 may be perpendicular to the plane (or the local plane) of the internal wall 28, as shown in Figure 8. Alternatively, at least some of the effusion cooling holes 80 may be at an angle to the internal wall 28. That is, the axis of at least some of the effusion cooling holes 80 may form an acute angle with the internal wall 28. In some arrangements, the axes of all of the effusion cooling holes 80 may form an acute angle with the internal wall 28.

In an embodiment of the invention, the internal wall 28 may be formed of discrete wall elements in the form of tile, in a similar general configuration to the tiles 29A and 29B described above in relation to Figure 3. In alternative embodiments, the internal wall 28 may be a continuous internal surface, rather than being in the form of discrete tiles.

In the embodiment described herein in relation to Figure 4, the axis of the feed hole 42 is accurately positioned (for example aligned) relative to the major (longitudinal) axis 200 of the protrusion 50. Any suitable manufacturing process could be used to achieve the accurate relative positioning. For example, an integral manufacturing process, including direct laser deposition, could be used.

The present invention has been described herein in relation to a double-wall structure for a combustor in a gas turbine engine. However, it will be appreciated that the described double-wall structure could be applied to any suitable component. For example, the double-wall structure could be applied to any component in a gas turbine engine that requires cooling, for example due to being exposed to a hot working fluid. The described double-wall structure 100 could, for example, be used in a turbine vane, blade, or shroud, or in any aerofoil component that is exposed to high temperature fluid.

It will be appreciated that many alternative configurations and/or arrangements of the double wall structure 100 and components/parts thereof other than those described herein may fall within the scope of the invention as defined in the claims. For example, alternative arrangements of protrusion 50 and/or trough 60 may fall within the scope of the invention as defined in the claims. Furthermore, any feature described and/or claimed herein may be combined with any other compatible feature described in relation to the same or another embodiment.

## Claims

1. A gas turbine engine component comprising a double-wall structure (100), the double-wall structure (100) comprising:
a first wall (28) having a first surface (39) and a second surface (41);
a second wall (27) spaced apart from the first wall (28) such that the second surface (41) of the first wall (28) faces the second wall (27), the second wall (27) comprising at least one cooling fluid orifice (42) configured to direct cooling fluid in the direction of the first wall (28); and
at least one protrusion (50) extending from a base (52) on the second surface (41) of the first wall (28) to a tip (54), wherein:
the or each protrusion (50) corresponds to a respective cooling fluid orifice (42) and is located such that a line that passes through the tip (54) of a given protrusion (50) and which is normal to the second surface (41) passes through the respective cooling fluid orifice (42) such that, in use, cooling fluid from its respective cooling fluid orifice (42) is directed towards its tip (54), with substantially all cooling fluid that is directed towards the tip (54) of any given protrusion (50) being from its corresponding respective cooling fluid orifice (42) such that the cooling fluid follows the external shape of the protrusion 50 as it moves from the tip 54 to the base 52; and
the height (h) of the protrusion (50) above the second surface (41) is at least 25% of the distance (w) between the first wall (28) and the second wall (27).

2. A gas turbine engine component comprising a double-wall structure (100) according to claim 1, wherein the protrusion (50) has a generally tapered shape from the base (52) to the tip (54) such that, in use, the cooling fluid is caused to diverge over the protrusion (50) as it passes from the tip (54) to the base (52).

3. A gas turbine engine component comprising a double-wall structure (100) according to any one of claims 1 to 2, the double-wall structure comprising a plurality of cooling fluid orifices (42), each cooling fluid orifice (42) corresponding to a single respective protrusion (50) such that, in use, substantially all cooling fluid from any given cooling fluid orifice (42) is directed towards its corresponding single respective protrusion (50).

4. A gas turbine engine component comprising a double-wall structure (100) according to any one of the preceding claims, further comprising a trough (60) extending around at least a part of the perimeter of the base (52) of the or each protrusion (50), the trough (60) being formed in the second surface (41) of the first wall (28).

5. A gas turbine engine component comprising a double-wall structure (100) according to any one of the preceding claims, wherein:
the or each protrusion (50) has a major axis (200); and
the major axis (200) is either aligned with a major axis of a corresponding cooling fluid orifice (42), or the major axis (200) is parallel to and offset from a major axis of a corresponding cooling fluid orifice (42).

6. A gas turbine engine component comprising a double-wall structure (100) according to any one of the preceding claims, wherein the or each protrusion (50) is axisymmetric about a major axis (200) that is substantially normal to the second surface (41) of the first wall (28), from which the protrusion (50) extends.

7. A gas turbine engine component comprising a double-wall structure (100) according to any one of claims 1 to 4, wherein the or each protrusion (50) is skewed from base (52) to tip (54) in a direction that is parallel to the principal rotational axis (X-X) of the gas turbine engine (10) when assembled, and in the upstream direction of the fluid flow through the gas turbine engine (10) when in use.

8. A gas turbine engine component comprising a double-wall structure (100) according to any one of the preceding claims, wherein cross sections taken through the or each protrusion (50) in any plane perpendicular to the major axis (200) are circular.

9. A gas turbine engine component comprising a double-wall structure (100) according to any one of claims 1 to 4, wherein the or each protrusion (50) has a major axis that is parallel to the second surface (41) of the first wall (28).

10. A gas turbine engine component comprising a double-wall structure (100) according to any one of the preceding claims, wherein:
the or each cooling fluid orifice (42) is a feed hole (42) in the second wall (27), and, optionally, the tip (54) of the or each protrusion (50) extends at least partially into a respective feed hole (42) in the second wall (27).

11. A gas turbine engine component comprising a double-wall structure (100) according to any one of claims 3 to 10, wherein each protrusion (50) has a major longitudinal axis (200), the spacing between neighbouring longitudinal axes (200) being at least 50% of the spacing between the first wall (28) and the second wall (27).

12. A gas turbine engine component comprising a double-wall structure (100) according to any one of the preceding claims, wherein the gas turbine engine component is any one of a combustor (15), an aerofoil, and a nozzle.

13. A gas turbine engine having a gas turbine engine component comprising a double-wall structure (100) according to any one of the preceding claims.

14. A method of cooling a double-wall structure (100) the double-wall structure (100) having a first wall (28) and a second wall (27), the second wall (27) being spaced apart from the first wall (28), the method comprising:
supplying a cooling fluid flow to a protrusion (50) from a respective cooling fluid orifice (42), the protrusion (50) being provided on a second surface (41) of the first wall (28), the protrusion (50) extending from a base (52) in the direction of the second wall (27) to a tip (54), the cooling fluid flow being directed towards the tip (54) of the protrusion (50), wherein:
the or each protrusion (50) being located such that a line that passes through the tip (54) of a given protrusion (50) and which is normal to the second surface (41) passes through the respective cooling fluid orifice (42) such that, in use, cooling fluid from its respective cooling fluid orifice (42) is directed towards its tip (54), with substantially all cooling fluid that is directed towards the tip (54) of any given protrusion (50) being from its corresponding respective cooling fluid orifice (42),
the height (h) of the protrusion (50) above the second surface (41) is at least 25% of the distance (w) between the first wall (28) and the second wall (27); and,
the cooling fluid follows the external shape of the protrusion 50 as it moves from the tip 54 to the base 52, thereby removing heat from the protrusion (50).

## Patentansprüche

1. Gasturbinenmotorkomponente, umfassend eine Doppelwandstruktur (100), wobei die Doppelwandstruktur (100) Folgendes umfasst:
eine erste Wand (28) mit einer ersten Oberfläche (39) und einer zweiten Oberfläche (41);
eine von der ersten Wand (28) beabstandete zweite Wand (27), sodass die zweite Oberfläche (41) der ersten Wand (28) der zweiten Wand (27) zugewandt ist, wobei die zweite Wand (27) zumindest eine Kühlflüssigkeitsöffnung (42) umfasst, die gestaltet ist, um Kühlflüssigkeit in die Richtung der ersten Wand (28) zu lenken; und
zumindest einen Vorsprung (50), der sich von einer Basis (52) an der zweiten Oberfläche (41) der ersten Wand (28) zu einer Spitze (54) erstreckt, wobei:
der oder jeder Vorsprung (50) einer jeweiligen Kühlflüssigkeitsöffnung (42) entspricht und so platziert ist, dass eine Leitung, die die Spitze (54) eines gegebenen Vorsprungs (50) durchläuft und die senkrecht zu der zweiten Oberfläche (41) ist, die jeweilige Kühlflüssigkeitsöffnung (42) durchläuft, sodass bei Verwendung Kühlflüssigkeit von ihrer jeweiligen Kühlflüssigkeitsöffnung (42) in Richtung ihrer Spitze (54) gelenkt wird, wobei im Wesentlichen die gesamte Kühlflüssigkeit, die in Richtung der Spitze (54) eines gegebenen Vorsprungs (50) gelenkt wird, von ihrer entsprechenden jeweiligen Kühlflüssigkeitsöffnung (42) stammt, sodass die Kühlflüssigkeit der äußeren Form des Vorsprungs 50 folgt, während sie sich von der Spitze 54 zu der Basis 52 bewegt; und
die Höhe (h) des Vorsprungs (50) über der zweiten Oberfläche (41) mindestens 25 % des Abstands (w) zwischen der ersten Wand (28) und der zweiten Wand (27) beträgt.

2. Gasturbinenmotorkomponente, umfassend eine Doppelwandstruktur (100) nach Anspruch 1, wobei der Vorsprung (50) eine im Allgemeinen konische Form von der Basis (52) zu der Spitze (54) aufweist, sodass bei Verwendung bewirkt wird, dass die Kühlflüssigkeit über dem Vorsprung (50) divergiert, während sie von der Spitze (54) zu der Basis (52) läuft.

3. Gasturbinenmotorkomponente, umfassend eine Doppelwandstruktur (100) nach einem der Ansprüche 1 bis 2, wobei die Doppelwandstruktur eine Vielzahl von Kühlflüssigkeitsöffnungen (42) umfasst, wobei jede Kühlflüssigkeitsöffnung (42) einem einzelnen jeweiligen Vorsprung (50) entspricht, sodass bei Verwendung im Wesentlichen die gesamte Kühlflüssigkeit einer gegebenen Kühlflüssigkeitsöffnung (42) in Richtung ihres entsprechenden einzelnen jeweiligen Vorsprungs (50) gelenkt wird.

4. Gasturbinenmotorkomponente, umfassend eine Doppelwandstruktur (100) nach einem der vorhergehenden Ansprüche, weiter umfassend eine Rinne (60), die sich um zumindest einen Teil des Umfangs der Basis (52) des oder jedes Vorsprungs (50) erstreckt, wobei die Rinne (60) in der zweiten Oberfläche (41) der ersten Wand (28) gebildet wird.

5. Gasturbinenmotorkomponente, umfassend eine Doppelwandstruktur (100) nach einem der vorhergehenden Ansprüche, wobei:
der oder jeder Vorsprung (50) eine Hauptachse (200) aufweist; und
sich die Hauptachse (200) entweder mit einer Hauptachse einer entsprechenden Kühlflüssigkeitsöffnung (42) deckt, oder die Hauptachse (200) parallel zu und versetzt zu einer Hauptachse einer entsprechenden Kühlflüssigkeitsöffnung (42) ist.

6. Gasturbinenmotorkomponente, umfassend eine Doppelwandstruktur (100) nach einem der vorhergehenden Ansprüche, wobei der oder jeder Vorsprung (50) axialsymmetrisch um eine Hauptachse (200) ist, die im Wesentlichen senkrecht zu der zweiten Oberfläche (41) der ersten Wand (28) ist, von der sich der Vorsprung (50) erstreckt.

7. Gasturbinenmotorkomponente, umfassend eine Doppelwandstruktur (100) nach einem der Ansprüche 1 bis 4, wobei der oder jeder Vorsprung (50) wenn zusammengebaut von Basis (52) zu Spitze (54) in eine Richtung verzehrt ist, die parallel zu der Hauptdrehachse (X-X) des Gasturbinenmotors (10) ist, und in die Anstromrichtung des Flüssigkeitsflusses durch den Gasturbinenmotor (10), wenn in Verwendung.

8. Gasturbinenmotorkomponente, umfassend eine Doppelwandstruktur (100) nach einem der vorhergehenden Ansprüche, wobei durch den oder jeden Vorsprung (50) in einer Ebene perpendikular zu der Hauptachse (200) genommene Querschnitte kreisförmig sind.

9. Gasturbinenmotorkomponente, umfassend eine Doppelwandstruktur (100) nach einem der Ansprüche 1 bis 4, wobei der oder jeder Vorsprung (50) eine Hauptachse aufweist, die parallel zu der zweiten Oberfläche (41) der ersten Wand (28) ist.

10. Gasturbinenmotorkomponente, umfassend eine Doppelwandstruktur (100) nach einem der vorhergehenden Ansprüche, wobei:
die oder jede Kühlflüssigkeitsöffnung (42) ein Führungsloch (42) in der zweiten Wand (27) ist, und sich optional die Spitze (54) des oder jedes Vorsprungs (50) zumindest teilweise in ein jeweiliges Führungsloch (42) in der zweiten Wand (27) erstreckt.

11. Gasturbinenmotorkomponente, umfassend eine Doppelwandstruktur (100) nach einem der Ansprüche 3 bis 10, wobei jeder Vorsprung (50) eine Hauptlängsachse (200) aufweist, wobei der Abstand zwischen benachbarten Längsachsen (200) zumindest 50 % des Abstands zwischen der ersten Wand (28) und der zweiten Wand (27) beträgt.

12. Gasturbinenmotorkomponente, umfassend eine Doppelwandstruktur (100) nach einem der vorhergehenden Ansprüche, wobei die Gasturbinenmotorkomponente eines von einer Brennkammer (15), eines Profils und einer Düse ist.

13. Gasturbinenmotor mit einer Gasturbinenmotorkomponente, umfassend eine Doppelwandstruktur (100) nach einem der vorhergehenden Ansprüche.

14. Verfahren zur Kühlung einer Doppelwandstruktur (100), wobei die Doppelwandstruktur (100) eine erste Wand (28) und eine zweite Wand (27) aufweist, wobei die zweite Wand (27) von der ersten Wand (28) beabstandet ist, wobei das Verfahren Folgendes umfasst:
Bereitstellen eines Kühlflüssigkeitsflusses zu einem Vorsprung (50) von einer jeweiligen Kühlflüssigkeitsöffnung (42), wobei der Vorsprung (50) an einer zweiten Oberfläche (41) der ersten Wand (28) bereitgestellt wird, wobei sich der Vorsprung (50) von einer Basis (52) in die Richtung der zweiten Wand (27) zu einer Spitze (54) erstreckt, wobei der Kühlflüssigkeitsfluss in Richtung der Spitze (54) des Vorsprungs (50) gelenkt wird, wobei:
der oder jeder Vorsprung (50) so platziert ist, dass eine Leitung, die die Spitze (54) eines gegebenen Vorsprungs (50) durchläuft und die senkrecht zu der zweiten Oberfläche (41) ist, die jeweilige Kühlflüssigkeitsöffnung (42) durchläuft, sodass bei Verwendung Kühlflüssigkeit von ihrer jeweiligen Kühlflüssigkeitsöffnung (42) in Richtung ihrer Spitze (54) gelenkt wird, wobei im Wesentlichen die gesamte Kühlflüssigkeit, die in Richtung der Spitze (54) eines gegebenen Vorsprungs (50) gelenkt wird, von ihrer entsprechenden jeweiligen Kühlflüssigkeitsöffnung (42) stammt,
die Höhe (h) des Vorsprungs (50) über der zweiten Oberfläche (41) mindestens 25 % des Abstands (w) zwischen der ersten Wand (28) und der zweiten Wand (27) beträgt; und
die Kühlflüssigkeit der äußeren Form des Vorsprungs 50 folgt, während sie sich von der Spitze 54 zu der Basis 52 bewegt, wodurch Wärme von dem Vorsprung (50) entfernt wird.

## Revendications

1. Un composant d'un moteur à turbine à gaz, comprenant une structure à double paroi (100), la structure à double paroi (100) comprenant :
une première paroi (28) dotée d'une première surface (39) et d'une deuxième surface (41) ;
une deuxième paroi (27) espacée de la première paroi (28) de sorte que la deuxième surface (41) de la première paroi (28) se trouve face à la deuxième paroi (27), la deuxième paroi (27) comprenant au moins un orifice de fluide de refroidissement (42) configuré pour diriger le fluide de refroidissement vers la première paroi (28) ; et
au moins une saillie (50) s'étendant d'une base (52) sur la deuxième surface (41) de la première paroi (28) à une pointe (54),
la ou chaque saillie (50) correspondant à un orifice de fluide de refroidissement respectif (42), et étant située de sorte qu'une ligne passant par la pointe (54) d'une certaine saillie (50), et étant perpendiculaire à la deuxième surface (41), passe par l'orifice de fluide de refroidissement respectif (42), afin qu'en cours d'usage, le fluide de refroidissement provenant de son orifice de fluide de refroidissement respectif (42) soit dirigé vers sa pointe (54), substantiellement tout le fluide de refroidissement étant dirigé vers la pointe (54) de toute saillie (50) donnée provenant de son orifice de fluide de refroidissement respectif comespondant (42), de sorte que le fluide de refroidissement suive la forme externe de la saillie 50 lorsqu'il se déplace de la pointe 54 à la base 52 ; et
la hauteur (h) de la saillie (50) au-dessus de la deuxième surface (41) étant égale à au moins 25% de la distance (w) entre la première paroi (28) et la deuxième paroi (27).

2. Un composant d'un moteur à turbine à gaz, comprenant une structure à double paroi (100), selon la revendication 1, la saillie (50) étant de forme généralement conique de la base (52) à la pointe (54), en déterminant ainsi, en cours d'usage, la diversion du fluide de refroidissement sur la saillie (50) lorsqu'il passe de la pointe (54) à la base (52).

3. Un composant d'un moteur à turbine à gaz, comprenant une structure à double paroi (100), selon une quelconque des revendications 1 à 2, la structure à double paroi comprenant une pluralité d'orifices de fluide de refroidissement (42), chaque orifice de fluide de refroidissement (42) correspondant à une saillie respective unique (50) de sorte qu'en cours d'usage, substantiellement tout le fluide de refroidissement provenant de tout orifice de fluide de refroidissement (42) donné soit dirigé vers sa saillie respective unique (50) correspondante.

4. Un composant d'un moteur à turbine à gaz, comprenant également une structure à double paroi (100), selon une quelconque des revendications précédentes, comprenant en outre un creux (60) s'étendant sur au moins une partie du pourtour de la base (52) de la ou chaque saillie (50), le creux (60) étant pratiqué dans la deuxième surface (41) de la première paroi (28).

5. Un composant d'un moteur à turbine à gaz, comprenant une structure à double paroi (100), selon une quelconque des revendications précédentes,
la ou chaque saillie (50) possédant un axe principal (200) ; et
l'axe majeur (200) étant soit aligné avec un axe majeur d'un orifice de fluide de refroidissement (42) correspondant, soit parallèle à un axe majeur d'un orifice de fluide de refroidissement (42) correspondant, et décalé de ce dernier.

6. Un composant d'un moteur à turbine à gaz, comprenant une structure à double paroi (100), selon une quelconque des revendications précédentes, la ou chaque saillie (50) étant asymétrique avec un axe principal (200) substantiellement perpendiculaire à la deuxième surface (41) de la première paroi (28), de laquelle s'étend la saillie (50).

7. Un composant d'un moteur à turbine à gaz, comprenant une structure à double paroi (100), selon une quelconque des revendications 1 à 4, la ou chaque saillie (50) étant inclinée de la base (52) à la pointe (54) dans une direction parallèle à l'axe de rotation principal (X-X) du moteur à turbine à gaz (10) lorsqu'il est assemblé, et dans la direction en amont de l'écoulement du fluide à travers le moteur à turbine à gaz (10) en cours d'utilisation.

8. Un composant d'un moteur à turbine à gaz, comprenant une structure à double paroi (100), selon une quelconque des revendications précédentes, des sections transversales à travers la ou chaque saillie (50) dans un plan quelconque perpendiculaire à l'axe principal (200) étant circulaires.

9. Un composant d'un moteur à turbine à gaz, comprenant une structure à double paroi (100), selon une quelconque des revendications 1 à 4, la ou chaque saillie (50) présentant un axe majeur parallèle à la deuxième surface (41) de la première paroi (28).

10. Un composant d'un moteur à turbine à gaz, comprenant une structure à double paroi (100), selon une quelconque des revendications précédentes,
le ou chaque orifice de fluide de refroidissement (42) étant un orifice d'alimentation (42) dans la deuxième paroi (27), et, en option, la pointe (54) de la ou chaque saillie (50) s'étendant au moins partiellement dans un orifice d'alimentation respectif (42) dans la deuxième paroi (27).

11. Un composant d'un moteur à turbine à gaz, comprenant une structure à double paroi (100), selon une quelconque des revendications 3 à 10, chaque saillie (50) présentant un axe longitudinal principal (200), l'écart entre axes longitudinaux voisins (200) étant égal à au moins 50% de l'écart entre la première paroi (28) et la deuxième paroi (27).

12. Un composant d'un moteur à turbine à gaz, comprenant une structure à double paroi (100), selon une quelconque des revendications précédentes, le composant du moteur à turbine à gaz étant un quelconque des suivants : une chambre de combustion (15), un profil aérodynamique et une tuyère.

13. Un moteur à turbine à turbine à gaz, avec un composant de moteur à turbine à gaz comprenant une structure à double paroi (100) selon une quelconque des revendications précédentes.

14. Une méthode de refroidissement d'une structure à double paroi (100), la structure à double paroi (100) possédant une première paroi (28) et une deuxième paroi (27), la deuxième paroi (27) étant espacée de la première paroi (28), la méthode comprenant :
la fourniture d'un écoulement de fluide de refroidissement à une saillie (50) depuis un orifice de fluide de refroidissement respectif (42), la saillie (50) étant pratiquée sur une deuxième surface (41) de la première paroi (28), la saillie (50) s'étendant d'une base (52) en direction de la deuxième paroi (27) d'une pointe (54), l'écoulement du fluide de refroidissement étant dirigé vers la pointe (54) de la saillie (50),
la ou chaque saillie (50) étant située de sorte qu'une ligne passant par la pointe (54) d'une certaine saillie (50), et étant perpendiculaire à la deuxième surface (41), passe par l'orifice de fluide de refroidissement respectif (42), afin qu'en cours d'usage, le fluide de refroidissement provenant de son orifice de fluide de refroidissement respectif (42) soit dirigé vers sa pointe (54), substantiellement tout le fluide de refroidissement étant dirigé vers la pointe (54) de toute saillie (50) donnée provenant de son orifice de fluide de refroidissement respectif correspondant (42),
la hauteur (h) de la saillie (50) au-dessus de la deuxième surface (41) étant égale à au moins 25% de la distance (w) entre la première paroi (28) et la deuxième paroi (27) ; et
le fluide de refroidissement suive la forme externe de la saillie 50 lorsqu'il se déplace de la pointe 54 à la base 52, en éliminant ainsi la chaleur de la saillie (50).
